# EUROPÄISCHE PATENTSCHRIFT

(11) **EP 2 380 724 B1**
(45) Veröffentlichungstag und Bekanntmachung des Hinweises auf die Patenterteilung: **20.04.2016**
(21) Anmeldenummer: 11155201.4
(22) Anmeldetag: 21.02.2011
(51) Int. Cl.: B29C 45/76, G01N 11/04, G01N 11/08

(54) **Messvorrichtung und Messverfahren für eine Spritzgießmaschine zur Ermittlung einer chargenspezifischen Kennzahl**
Measuring device and measuring method for an injection moulding machine for determining a load-specific indicator
Dispositif de mesure et procédé de mesure pour une machine de moulage par injection pour l'établissement d'un indice spécifique à la charge

(30) Priorität: 20.04.2010 DE 102010027942
(43) Veröffentlichungstag der Anmeldung: 26.10.2011
(73) Patentinhaber: Robert Bosch GmbH, 70442 Stuttgart (DE)
(72) Erfinder: Maris-Haug, Patricia, 74385, Pleidelsheim (DE); Ackermann, Jens, 70437, Stuttgart (DE); Geise, Stephan, 59602, Ruethen (DE); Haag, Guenter, 70599, Stuttgart (DE); Lehtonen, Paeivi, 70736, Fellbach (DE); Liedl, Philipp, 70180, Stuttgart (DE)

(56) Entgegenhaltungen:
- DE-A1- 2 519 207
- DE-A1- 3 211 728
- FR-A1- 2 621 525
- GB-A- 2 131 953
- GB-A- 2 158 252
- JP-A- 5 329 864
- JP-A- 11 010 694
- BADER C ET AL: "RHEOLOGISCHE MESSUNGEN AUF DER SPRITZGIESSMASCHINE", KUNSTOFFE INTERNATIONAL, CARL HANSER VERLAG, MUNCHEN, DE, Bd. 81, Nr. 3, 1. März 1991 (1991-03-01), Seiten 220-224, XP000287484, ISSN: 0023-5563

## Beschreibung

Die vorliegende Erfindung betrifft eine Messvorrichtung und ein Messverfahren für eine Spritzgießmaschine zur Ermittlung einer chargenspezifischen Kennzahl während eines Spritzgießvorganges.

### Stand der Technik

Es sind zahlreiche Vorrichtungen und Verfahren zur Ermittlung von Eigenschaften von Werkstoffen, welche in Spritzgießverfahren verwendet werden, bekannt. Beispielsweise ist aus der DE 197 15 630 A1 eine Vorrichtung und ein Verfahren zur Bestimmung rheologischer Stoffdaten von Polymeren bekannt, wobei die Vorrichtung zur Ankoppelung, beispielsweise an einen Extruder, vorgesehen ist. Die Vorrichtung weist einen als Messstrecke dienenden Fließkanal in einem Gehäuse auf, wobei Druck- und Temperaursensoren im Bereich der Messstrecke vorgesehen sind, mit einer Austrittsdüse an dem freien Ende der Messstrecke und mit einer den Fließkanal aufheizenden Heizeinrichtung und mit einer Temperaturregeleinrichtung, wobei die Temperaturregeleinrichtung einen Heiz- und Kühlkreislauf mit einem flüssigen Wärmeübertragungsmedium steuert, wobei der Durchmesser des Fließkanals zwischen der Eintrittsöffnung des Fließkanals und der Austrittsdüse einen gleichbleibenden Durchmesser aufweist. Das Verfahren dient dabei der Steuerung des Wärmeübertrages mit dem Ziel die Prozessstabilität des Spritzgießprozesses zu erhöhen.

Nachteilig bei derartigen Vorrichtungen und Verfahren ist, dass die Ermittlung werkstoffabhängiger Daten aufwändig ist und zu ungenauen Ergebnissen führt. JP 05329864 zeigt eine Messvorrichtung nach dem Oberbegriff von Anspruch 1.

Das Dokument XP287484 offenbart eine Messverfahren zur Ermittlung einer chargenspezifischen Kennzahl eines plastifizierten Kunststoffs.

### Offenbarrung der Erfindung

Es ist daher die Aufgabe der Erfindung eine Messvorrichtung für eine Spritzgießmaschine und ein Messverfahren zur Ermittlung einer chargenspezifischen Kennzahl eines plastifizierten Kunststoffes bereitzustellen, welche bzw. welches eine einfachere Ermittlung von werkstoffabhängigen Daten ermöglicht und wobei die Genauigkeit der werkstoffabhängigen Daten verbessert wird.

Die Lösung der Aufgabe erfolgt erfindungsgemäß durch die Merkmale des Anspruch 1 und 6. Vorteilhafte Ausgestaltungen der Erfindung sind in den Unteransprüchen angegeben.

Die erfindungsgemäße Messvorrichtung für eine Spritzgießanlage zur Ermittlung einer chargenspezifischen Kennzahl eines plastifizierten Kunststoffes ist gemäß Anspruch 1 ausgebildet.

Innerhalb der Plastifiziereinheit der Spritzgießmaschine ist vorzugsweise eine Plastifizierschnecke zum Plastifizieren eines Kunststoffes angeordnet. Der Fließkanal der erfindungsgemäßen Messvorrichtung erstreckt sich vorzugsweise von dem in Richtung des Werkzeugs weisenden Endes der Plastifizierschnecke aus, führt in das Werkzeug und mündet in einer innerhalb des Werkzeugs ausgebildeten Kavität. Der Fließkanal ist derart mit der Plastifiziereinheit der Spritzgießmaschine verbunden, dass beispielsweise mittels der Plastifizierschnecke plastifizierter Kunststoff aus der Plastifiziereinheit durch den Fließkanal in die Kavität des Werkzeugs strömen kann. Der Fließkanal weist einen ersten Drucksensor und einen zweiten Drucksensor auf, wobei die Drucksensoren jeweils eine Messung des Druckes beispielsweise des Massedruckes, des durch den Fließkanal strömenden plastifizierten Kunststoffes durchführen können. Der erste Drucksensor kann dabei an einem der Plastifiziereinheit zugewandten Abschnitt des Fließkanals angeordnet sein und der zweite Drucksensor kann an einem dem Werkzeug zugewandten Abschnitt des Fließkanals angeordnet sein. Die Drucksensoren, welche entlang einer geometrischen Mittelachse des Fließkanals angeordnet sein können, bilden jeweils eine erste Messstelle und eine zweite Messstelle. Der Abstand zwischen dem ersten Drucksensor und dem zweiten Drucksensor bzw. der ersten Messstelle und der zweiten Messstelle entspricht einer Messstrecke entlang des Fließkanals zur Messung einer Druckdifferenz. An der ersten Messstelle kann zusätzlich ein erster Temperatursensor und an der zweiten Messstelle ein zweiter Temperatursensor angeordnet sein. Die Temperatursensoren können dabei in Form von Infrarotsensoren ausgestaltet sein. Zwischen dem ersten Drucksensor und dem zweiten Drucksensor weist der Fließkanal eine Verjüngung auf. Die Verjüngung kann derart ausgestaltet sein, dass der Durchmesser des Fließkanals im Bereich der Verjüngung in radialer Richtung des Fließkanals verringert ist. Durch diese Verjüngung ergibt sich ein größerer Druckunterschied zwischen den Drucksensoren, so dass auch kleinere Änderungen des plastifizierten Kunststoffes erkannt und ausgewertet werden können. Der Fließkanal kann in Strömungsrichtung, beispielsweise des plastifizierten Kunststoffes von der Plastifizierschnecke oder Plastifiziereinheit hin zu der Kavität, vor und hinter der Verjüngung einen gleich großen Durchmesser oder einen unterschiedlich großen Durchmesser aufweisen. Die Verjüngung kann beispielsweise in Form einer Einspritzdüse ausgestaltet sein. Es ist aber auch möglich, dass die Verjüngung separat, d. h. nicht durch ein bestehendes Bauteil, innerhalb des Fließkanals durch eine Durchmesserreduzierung des Fließkanals ausgebildet ist. Durch die Reduzierung des Strömungsquerschnittes des Fließkanals an der Verjüngung kommt es zu einer Erhöhung des Drucks in dem den Fließkanal durchströmenden plastifizierten Kunststoff. Durch Druckmessungen an dem ersten Messpunkt und dem zweiten Messpunkt kann eine Druckdifferenz in dem plastifizierten Kunststoff, welcher durch den Fließkanal strömt, gemessen werden. Durch die Messung der Druckdifferenz und der Temperatur des plastifizierten Kunststoffs kann beispielsweise die Viskosität des durch den Fließkanal strömenden plastifizierten Kunststoffs erfasst werden. Die Anordnung der Messvorrichtung zwischen der Plastifiziereinheit und dem Werkzeug ermöglicht eine Durchführung von Druckmessungen an dem ersten Messpunkt und an dem zweiten Messpunkt zu definierten Zeitpunkten und/oder zu definierten Zeitintervallen während eines Einspritzvorganges. Dadurch, dass der Fließkanal und somit die Messvorrichtung vorzugsweise bei einem produktionsüblichen Einspritzvorgang ohne Prozessänderungen von dem plastifizierten Kunststoff durchströmt wird, kann die Ermittlung der Druckmesswerte und beispielsweise der daraus abgeleiteten, werkstoffabhängigen Daten vereinfacht werden. Darüber hinaus ermöglicht die erfindungsgemäße Messvorrichtung die Durchführung von Druckmessungen beispielsweise bei unmittelbar aufeinanderfolgenden Einspritzvorgängen. Dadurch kann die Anzahl der, beispielsweise für einen bestimmten Kunststoff, durchgeführten Messungen erhöht werden, wodurch die Genauigkeit der ermittelten werkstoffabhängigen Daten verbessert werden kann.

In einer bevorzugten Ausgestaltung der Messvorrichtung ist der erste Drucksensor innerhalb der Spritzgießmaschine und/oder der zweite Drucksensor innerhalb des Werkzeugs angeordnet. Der erste Drucksensor kann dabei als ein interner Spritzgießmaschinen Drucksensor ausgebildet sein, welcher beispielsweise als Hydraulikdrucksensor oder Spritzdrucksensor ausgestaltet sein kann. Der in der Spritzgießmaschine integrierte Drucksensor kann dabei zur Erfassung des Druckes des plastifizierten Kunststoffes verwendet werden, wobei der gemessene Druck bei der Ermittlung der Druckdifferenz als Druck des ersten Messpunktes verwendet werden kann. Der zweite Drucksensor kann beispielsweise ein in dem Werkzeug angeordneter Drucksensor sein, welcher beispielsweise innerhalb des Werkzeuges entlang des Fließkanals angeordnet sein kann. Der erste Drucksensor ist dabei in Strömungsrichtung vor der Verjüngung und der zweite Drucksensor in Strömungsrichtung hinter der Verjüngung angeordnet. Durch die Nutzung bereits in der Spritzgießmaschine oder in dem Werkzeug vorhandener Drucksensoren kann der Aufbau der Messvorrichtung vereinfacht und die Kosten für die Messvorrichtung gesenkt werden. Es ist aber auch möglich, dass der erste Drucksensor und der zweite Drucksensor entlang des Fließkanals in der Spritzgießmaschine angeordnet sind, oder dass der erste Drucksensor und der zweite Drucksensor entlang des Fließkanals in dem Werkzeug angeordnet sind.

In einer besonders bevorzugten Ausführungsform ist die Messvorrichtung als separates Bauteil ausgebildet. Durch die Ausgestaltung der erfindungsgemäßen Messvorrichtung als separates Bauteil kann die Messvorrichtung zwischen der Einspritzdüse der Spritzgießmaschine und der Plastifiziereinheit der Spritzgießmaschine angeordnet sein. Dadurch kann die Messvorrichtung einfach in eine Spritzgießanlage integriert werden und ermöglicht zudem eine einfachere Wartung der Messvorrichtung, da diese als ein Bauteil entfernt und beispielsweise gegen eine andere Messvorrichtung ausgetauscht werden kann.

Erfindungsgemäß sind ein externes erstes Auswertungsmodul und ein externes zweites Auswertungsmodul vorgesehen. Durch das externe erste Auswertungsmodul wird dabei die Ermittlung der Messzeitpunkte, beispielsweise der Beginn und das Ende einer Druckmessung oder die Dauer der Messung, in Abhängigkeit der an der ersten und der zweiten Messstelle gemessenen Drücke berechnet. Die Messzeitpunkte und/oder die Messdauer können auch manuell einstellbar sein. Die an der ersten und zweiten Messstelle ermittelten Drücke sind in dem externen zweiten Auswertungsmodul auswertbar. Dadurch können werkstoffabhängige Daten, beispielsweise die Viskosität des plastifizierten Kunststoffes, ermittelt werden.

In einer bevorzugten Ausführungsform sind das erste Auswertungsmodul und/oder das zweite Auswertungsmodul in eine Steuerung und/oder Regelung der Spritzgießmaschine integriert. Dadurch, dass mindestens ein Auswertungsmodul in die Steuerung und/oder Regelung der Spritzgießmaschine integrierbar ist, können die Kosten für die erfindungsgemäße Messvorrichtung reduziert werden. Darüber hinaus kann der Messvorgang mittels der Messvorrichtung optimal auf die von der Steuerung und/oder Regelung der Spritzgießmaschine vorgegebenen Parameter abgestimmt werden.

Die Erfindung betrifft ferner eine Spritzgießanlage umfassend mindestens eine wie vorstehend aus- und weitergebildete Messvorrichtung. Die Spritzgießanlage umfasst eine Spritzgießmaschine, welche eine Plastifiziereinheit und eine Einspritzdüse aufweist, und ein an die Spritzgießmaschine angrenzendes Werkzeug, wobei die Spritzgießmaschine über ihre Einspritzdüse mit dem Werkzeug verbunden ist.

Ferner betrifft die Erfindung ein Messverfahren zur Ermittlung einer chargenspezifischen Kennzahlen eines plastifizierten Kunststoffes beim Durchfließen eines zwischen einer Plastifiziereinheit und einem Werkzeug vorgesehenen, eine Verjüngung aufweisenden Fließkanals während eines Spritzgießvorgangs gemäß Anspruch 6.

Das erfindungsgemäße Messverfahren ermöglicht die Ermittlung einer Kennzahl für eine Charge von plastifiziertem Kunststoff während eines Spritzgießvorganges, welche bestimmte Materialeigenschaften wiedergibt, ohne dass eine Probenentnahme und eine separate Auswertung zur Bestimmung der Materialeigenschaften in einem Labor notwendig sind. Die abstrakte Kennzahl ist chargenspezifisch und reproduzierbar, wobei die Ermittlung der Kennzahl durch das erfindungsgemäße Messverfahren unabhängig von den Prozessparametern erfolgt. Die chargenspezifische Kennzahl ist im allgemeinen von der Temperatur abhängig. Infolgedessen gehen die über die Temperatursensoren ermittelten Temperaturwerte des plastifizierten Kunststoffs in die Berechnung der chargenspezifische Kennzahl ein. Eine erste Messung erfolgt während eines ersten Messintervalls während eines ersten Spritzgießvorgangs, wobei das erste Messintervall mit einem ersten unteren Messzeitpunkt beginnt und mit einem ersten oberen Messzeitpunkt endet. Während des ersten Messintervalls werden erste Messdaten des ersten Drucksensors und des zweiten Drucksensors und des ersten Temperatursensors und des zweiten Temperatursensors für den durch den Fließkanal strömenden plastifizierten Kunststoff erfasst. Die Drucksensoren können beispielsweise den Massedruck des plastifizierten Kunststoffes erfassen.

Die in einer ersten Messung erfassten ersten Messdaten werden zu einem ersten Auswertungsmodul und zu einem zweiten Auswertungsmodul weitergeleitet. Die Weiterleitung der Messdaten kann dabei während eines Messintervalls oder nach Beendigung eines Messintervalls durchgeführt werden.

In dem ersten Auswertungsmodul wird aufgrund der von den Drucksensoren erfassten ersten Messdaten des ersten Drucksensors und des zweiten Drucksensors und des ersten Temperatursensors und des zweiten Temperatursensors mittels eines Algorithmus adaptiv ein zweites Messintervall mit einem zweiten unteren Messzeitpunkt und einem zweiten oberen Messzeitpunkt berechnet. Die Berechnung des zweiten oder weiterer unterer und oberer Messzeitpunkte erfolgt adaptiv oder angepasst an die bei Spritzgießvorgängen erfassten Messdaten, welche von Material zu Material und von Charge zu Charge verschieden sein können. Das in dem ersten Auswertungsmodul errechnete zweite Messintervall, erfasst den Zeitraum innerhalb des Spritzgießvorgangs, innerhalb dessen eine laminare Strömung in der Messvorrichtung und/oder dem Fließkanal angenommen werden kann. Der untere Messzeitpunkt kennzeichnet das Einsetzen der laminaren Strömung in der Messvorrichtung und der obere Messzeitpunkt kennzeichnet das Ende des Füllvorganges der Kavität mit dem plastifizierten Kunststoff, welcher durch den sich aufbauenden Gegendruck angezeigt wird, wobei die laminare Strömung in diesem Messzeitpunkt endet. Die Berechnung des zweiten Messintervalls in dem ersten Auswertungsmodul berücksichtigt unter anderem die Spritzgießparameter, beispielsweise die Einspritzgeschwindigkeit, sowie die Abhängigkeit der Viskosität des plastifizierten Kunststoffes von der Scherrate.

Eine Ermittlung der ersten chargenspezifischen Kennzahl erfolgt in dem zweiten Auswertungsmodul. Die Ermittlung der chargenspezifischen Kennzahl für den betreffenden plastifizierten Kunststoff erfolgt aufgrund der von den Drucksensoren und Temperatursensoren erfassten ersten Messdaten und des zeitlichen Druckverlaufes der Messdaten des ersten Drucksensors und des zweiten Drucksensors. Zur Ermittlung der ersten chargenspezifischen Kennzahl wird der erfasste Druckunterschied zwischen dem ersten Drucksensor und dem zweiten Drucksensor ausgewertet und gefiltert, wobei aus dem Quotienten der Druckdifferenz und der Einströmgeschwindigkeit des plastifizierten Kunststoffes die chargenspezifische Kennzahl gebildet wird. Über statistische Auswerteverfahren erfolgt eine Mittelung der mittels der Drucksensoren und Temperatursensoren ermittelten Messdaten, so dass die statistische Signifikanz der chargenspezifischen Kennzahl deutlich erhöht werden kann.

Die ersten unteren und oberen Messzeitpunkte sowie die erste chargenspezifische Kennzahl werden gespeichert.

Während eines auf den ersten Spritzgießvorganges folgenden zweiten Spritzgießvorganges erfolgt eine zweite Messung, wobei der zweite Spritzgießvorgang mit der zweiten Messung zeitlich nicht unmittelbar auf den ersten Spritzgießvorgang erfolgen muss. Die zweite Messung erfolgt in dem errechneten zweiten Messintervall und beginnt mit dem unteren Messzeitpunkt und endet mit dem zweiten oberen Messzeitpunkt. Die von dem ersten Drucksensor und zweiten Drucksensor und dem ersten Temperatursensor und dem zweiten Temperatursensor erfassten zweiten Messdaten werden an das erste und zweite Auswertungsmodul weitergeleitet, wo eine erneute Auswertung erfolgt.

Nach der zweiten Messung kann sich die Messung noch beliebig oft wiederholen, so dass n-Messungen möglich sind, wobei n-Messintervalle mit n-unteren Messzeitpunkten und n-oberen Messzeitpunkten erfolgen können, um n-Messdaten zu erhalten.

Durch das erfindungsgemäße Messverfahren wird die Ermittlung einer chargenspezifischen Kennzahl während des Spritzgießvorganges ohne die Entnahme von Proben ermöglicht und dadurch erheblich vereinfacht. Dadurch ist eine unmittelbare Bewertung des während eines Spritzgießvorganges verwendeten plastifizierten Kunststoffes möglich, wodurch Schwankungen der Materialqualität des plastifizierten Kunststoffes umgehend erkannt werden können. Durch die Integration des Messverfahrens in den Spritzgießvorgang sind eine Anzahl von unmittelbar aufeinander folgenden Messvorgängen möglich, wodurch die Genauigkeit der Messergebnisse erhöht wird.

Bevorzugt werden der erste untere Messzeitpunkt und/oder der erste obere Messzeitpunkt manuell eingestellt. Durch die Möglichkeit der manuellen Einstellung, beispielsweise des ersten unteren Messzeitpunktes und des ersten oberen Messzeitpunktes, können bereits vorhandene Erfahrungswerte mit demselben oder einem ähnlichen Kunststoff, welcher in dem Spritzgießvorgang verwendet werden soll, berücksichtigt werden. Dadurch kann die Zeit bis zur Ermittlung, beispielsweise der geeigneten Messintervalle, zu denen eine laminare Strömung angenommen werden kann, verkürzt werden, so dass weniger Ausschuss produziert wird.

Besonders bevorzugt werden die unteren Messzeitpunkte und/oder die oberen Messzeitpunkte statistisch ausgewertet und die für die nachfolgenden Spritzgießvorgänge ermittelte Werte für den unteren Messzeitpunkt und/oder den oberen Messzeitpunkt verwendet. Durch eine Speicherung der unteren und/oder oberen Messzeitpunkte und deren statistische Auswertung, beispielsweise in Form von Berechnung von Mittelwerten, sowie die Bereitstellung der ausgewerteten Daten für die Ermittlung der Messintervalle und Messzeitpunkte nachfolgender Spritzgießvorgänge, kann die Ermittlung der optimalen Messzeitpunkte einer Charge plastifizierten Kunststoffes beschleunigt werden, da die zur Ermittlung verwendeten statistisch ermittelten Messzeitpunkte bereits dicht an den chargenspezifischen Messzeitpunkten liegen. Dadurch kann der Lernprozess zur Ermittlung der chargenspezifischen Messzeitpunkte innerhalb weniger Spritzgießvorgänge erfolgen und somit die Produktion von Ausschuss verringert werden. Darüber hinaus können die innerhalb eines Lernzyklus ermittelten Messzeitpunkte statistisch erfasst und ausgewertet werden, beispielsweise durch Bildung eines mittleren unteren und/oder mittleren oberen Messzeitpunktes. Die gemittelten unteren und/oder oberen Messzeitpunkte können nach einer vorgegebenen Anzahl an Spritzgießvorgängen für die zu verarbeitende Charge an Kunststoff manuell oder automatisch fixiert werden und erst bei Verwendung einer anderen Charge Kunststoff in einem erneuten Lernvorgang neu ermittelt werden, ausgelöst beispielsweise durch ein manuelles Signal oder durch die Änderung der ermittelten Chargenkennzahl..

Besonders bevorzugt wird die in dem zweiten Auswertungsmodul ermittelte chargenspezifische Kennzahl an eine Steuerung und/oder Regelung einer Spritzgießmaschine als Eingangssignal geleitet. Dadurch können ermittelte Materialschwankungen durch die Steuerung und/oder Regelung der Spritzgießmaschine berücksichtigt werden und eine Schwankung der Prozessqualität vermieden werden. Zusätzlich können mögliche Materialverwechslungen bei der Verarbeitung frühzeitig erkannt werden, wodurch die Fehlerrate bei dem Spritzgießvorgang vermindert werden kann.

Nachfolgend wird die Erfindung unter Bezugnahme auf die anliegende Zeichnung anhand bevorzugter Ausführungsbeispiele näher erläutert.

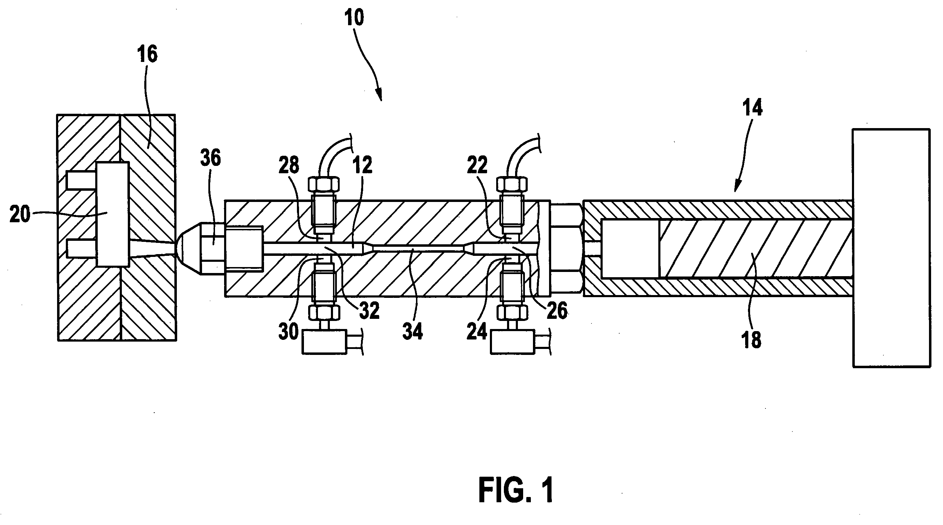

Die einzige Fig. 1 zeigt eine schematische Ansicht einer erfindungsgemäßen Messvorrichtung.

Die in Fig. 1 schematisch dargestellte Messvorrichtung 10 weist einen Fließkanal 12 auf, welcher zwischen einer Plastifiziereinheit 14 einer Spritzgießmaschine und einem Werkzeug 16 angeordnet ist. Der Fließkanal 12 ist mit der Plastifiziereinheit 14, in welcher eine Plastifizierschnecke 18 zum Plastifizieren eines Kunststoffes angeordnet ist, derart verbunden, dass der plastifizierte Kunststoff von der Plastifiziereinheit 14 durch den Fließkanal 12 in eine Kavität 20, welche innerhalb des Werkzeugs 16 ausgebildet ist, fließen kann.

Der Fließkanal 12 weist an einem ersten der Plastifiziereinheit 14 zugewandten Abschnitt einen ersten Drucksensor 22 und einen ersten Temperatursensor 24 auf, welche an einer ersten Messstelle 26 angeordnet sind. Der erste Drucksensor 22 kann beispielsweise an dem ersten Messstelle 26 den Massedruck des durch den Fließkanal 12 strömenden plastifizierten Kunststoffes messen, wobei der erste Temperatursensor 24, beispielsweise ein Infrarotsensor, die Temperatur des plastifizierten Kunststoffes erfassen kann.

An einem zweiten, dem Werkzeug 16 zugewandten Abschnitt des Fließkanals 12 sind ein zweiter Drucksensor 28 und ein zweiter Temperaursensor 30 an einer zweiten Messstelle 32 angeordnet.

Zwischen der ersten Messstelle 26 und der zweiten Messstelle 32 ist in dem Fließkanal 12 eine Verjüngung 34 ausgebildet, durch die der plastifizierte Kunststoff hindurch strömt. Der Fließkanal 12 weist vorzugsweise, wie in Fig. 1 gezeigt, an seiner ersten Messstelle 26 den gleichen Durchmesser auf, wie an seiner zweiten Messstelle 32. Die Verjüngung 34 selber weist einen zu der ersten Messstelle 26 und der zweiten Messstelle 32 reduzierten Durchmesser des Fließkanals 12 auf. Durch die Verjüngung 34 bildet sich in dem durch den Fließkanal 12 strömenden plastifizierten Kunststoff eine Druckveränderung aus, wobei die Druckdifferenz durch Vergleich der Druckmessungen an der ersten Messstelle 26 und der zweiten Messstelle 32 ermittelt werden kann. Aus der ermittelten Druckdifferenz, der Geometrie der Messvorrichtung und der über die Temperatursensoren ermittelten Temperatur kann die Viskosität des plastifizierten Kunststoffes ermittelt werden und eine chargenspezifische Kennzahl abgeleitet werden.

Entlang des Fließkanals 12 ist eine Einspritzdüse 36 vorgesehen, über welche der plastifizierte Kunststoff von der Spritzgießmaschine in die Kavität 20 des Werkzeugs 16 eingespritzt wird.

Bei der hier gezeigten Ausführungsform ist sowohl der erste Drucksensor 22 als auch der zweite Drucksensor 28 innerhalb der Spritzgießmaschine angeordnet, wobei der erste Drucksensor 22 und der zweite Drucksensor 28 zwischen der Plastifiziereinheit 18 und der Einspritzdüse 36 der Spritzgießmaschine entlang des Fließkanals 12 angeordnet sind.

## Patentansprüche

1. Messvorrichtung für eine Spritzgießmaschine zur Ermittlung einer chargenspezifischen Kennzahl eines plastifizierten Kunststoffes, umfassend einen zwischen einer Plastifiziereinheit (14) einer Spritzgießmaschine und einem Werkzeug (16) angeordneten Fließkanal (12),
wobei entlang des Fließkanals (12) ein erster Drucksensor (22) und ein zweiter Drucksensor (28) und ein erster Temperatursensor (24) und ein zweiter Temperatursensor (30) angeordnet sind,
der Fließkanal (12) zwischen dem ersten Drucksensor (22) und dem zweiten Drucksensor (28) eine Verjüngung (34) aufweist,
**dadurch gekennzeichnet, dass**
ein externes erstes Auswertungsmodul und ein externes zweites Auswertungsmodul vorgesehen sind,
wobei die Messvorrichtung (10) derart eingerichtet ist,
- dass während eines ersten Spritzgießvorganges erste Messdaten des ersten entlang des Fließkanals (12) angeordneten Drucksensors (22) und des zweiten entlang des Fließkanals (12) angeordneten Drucksensors (28) während eines ersten Messintervalls mit einem ersten unteren Messzeitpunkt und einem ersten oberen Messzeitpunkt erfasst werden, dass
- die ersten Messdaten der ersten Messung zu dem ersten Auswertungsmodul und zu dem zweiten Auswertungsmodul weiter geleitet werden, dass
- ein zweites Messintervall in dem ersten Auswertungsmodul mit einem zweiten unteren Messzeitpunkt und einem zweiten oberen Messzeitpunkt berechnet wird, wobei das zweite Messintervall den Zeitraum innerhalb des Spritzvorgangs erfasst, innerhalb dessen eine laminare Strömung in der Messvorrichtung und/oder dem Fließkanal angenommen werden kann, dass
- eine erste chargenspezifischen Kennzahl in dem zweiten Auswertungsmodul ermittelt wird,
- die ersten unteren und oberen Messzeitpunkte und die erste chargenspezifischen Kennzahl gespeichert werden, und dass
- eine zweite Messung während eines zweiten Spritzgießvorganges durch geführt wird, bei welcher zweite Messdaten des ersten Drucksensors (22) und des zweiten Drucksensors (28) während des zweiten Messintervalls erfasst werden.

2. Messvorrichtung nach Anspruch 1, **dadurch gekennzeichnet, dass** der zweite Drucksensor (28) innerhalb des Werkzeugs (16) angeordnet ist.

3. Messvorrichtung nach Anspruch 1 oder 2, **dadurch gekennzeichnet, dass** die Messvorrichtung (10) als separates Bauteil ausgebildet ist.

4. Messvorrichtung nach einem der Ansprüche 1 bis 3, **dadurch gekennzeichnet, dass** das erste Auswertungsmodul und/oder das zweite Auswertungsmodul in eine Steuerung und/oder Regelung der Spritzgießmaschine integriert sind.

5. Spritzgießanlage, umfassend mindestens eine Messvorrichtung (10) nach einem der Ansprüche 1 bis 4.

6. Messverfahren zur Ermittlung einer chargenspezifischen Kennzahl eines plastifizierten Kunststoffes beim Durchfließen eines zwischen einer Plastifiziereinheit (14) und einem Werkzeug (16) vorgesehenen, eine Verjüngung (34) aufweisenden Fließkanals (12) während eines Spritzgießvorgangs, umfassend die folgenden Schritte:
- Durchführen einer erste Messung während eines ersten Spritzgießvorganges, bei welcher erste Messdaten eines ersten entlang des Fließkanals (12) vorgesehenen Drucksensors (22) und eines zweiten entlang des Fließkanals (12) vorgesehenen Drucksensors (28) während eines ersten Messintervalls mit einem ersten unteren Messzeitpunkt und einem ersten oberen Messzeitpunkt erfasst werden;
- Weiterleiten der ersten Messdaten der ersten Messung zu einem ersten Auswertungsmodul und zu einem zweiten Auswertungsmodul;
- Berechnung eines zweiten Messintervalls in dem ersten Auswertungsmodul mit einem zweiten unteren Messzeitpunkt und einem zweiten oberen Messzeitpunkt, wobei das zweite Messintervall den Zeitraum innerhalb des Spritzvorgangs erfasst, innerhalb dessen eine laminare Strömung in der Messvorrichtung und/oder dem Fließkanal angenommen werden kann
- Ermitteln einer ersten chargenspezifischen Kennzahl in dem zweiten Auswertungsmodul;
- Speichern der ersten unteren und oberen Messzeitpunkte und der ersten chargenspezifischen Kennzahl;
- Durchführen einer zweiten Messung während eines zweiten Spritzgießvorganges, bei welcher zweite Messdaten des ersten Drucksensors (22) und des zweiten Drucksensors (28) während des zweiten Messintervalls erfasst werden.

7. Messverfahren nach Anspruch 6, **dadurch gekennzeichnet, dass** der erste untere Messzeitpunkt und/oder der erste obere Messzeitpunkt manuell eingestellt werden.

8. Messverfahren nach Anspruch 6 oder 7, **dadurch gekennzeichnet, dass** die unteren und/oder oberen Messzeitpunkte statistisch ausgewertet werden und für nachfolgende Spritzgießvorgänge ermittelte Werte für den unteren und/oder oberen Messzeitpunkt verwendet werden.

9. Messverfahren nach einem der Ansprüche 6 bis 8, **dadurch gekennzeichnet, dass** die im zweiten Auswertungsmodul ermittelte chargenspezifische Kennzahl an eine Steuerung und/oder Regelung der Spritzgießmaschinen als ein Eingangssignal geleitet wird.

## Claims

1. Measuring device for an injection-moulding machine for determining a batch-specific characteristic of a plasticized plastic, comprising a flow channel (12), which is arranged between a plasticizing unit (14) of an injection-moulding machine and a tool (16),
a first pressure sensor (22) and a second pressure sensor (28) and a first temperature sensor (24) and a second temperature sensor (30) being arranged along the flow channel (12),
the flow channel (12) having a taper (34) between the first pressure sensor (22) and the second pressure sensor (28),
**characterized in that**
an external first evaluation module and an external second evaluation module are provided,
the measuring device (10) being set up in such a way
- that, during a first injection-moulding operation, first measurement data of the first pressure sensor (22), arranged along the flow channel (12), and of the second pressure sensor (28), arranged along the flow channel (12), are detected during a first measuring interval with a first lower measuring time and a first upper measuring time, that
- the first measurement data of the first measurement are passed on to the first evaluation module and to the second evaluation module, that
- a second measuring interval is calculated in the first evaluation module with a second lower measuring time and a second upper measuring time, the second measuring interval covering the time period within the injection operation within which a laminar flow can be assumed in the measuring device and/or the flow channel, that
- a first batch-specific characteristic is determined in the second evaluation module,
- the first lower and upper measuring times and the first batch-specific characteristic are stored and that
- a second measurement, in which second measurement data of the first pressure sensor (22) and of the second pressure sensor (28) are detected during the second measuring interval, is carried out during a second injection-moulding operation.

2. Measuring device according to Claim 1, **characterized in that** the second pressure sensor (28) is arranged within the tool (16).

3. Measuring device according to Claim 1 or 2, **characterized in that** the measuring device (10) is formed as a separate component.

4. Measuring device according to one of Claims 1 to 3, **characterized in that** the first evaluation module and/or the second evaluation module are integrated in an open-loop control and/or closed-loop control of the injection-moulding machine.

5. Injection-moulding system, comprising at least one measuring device (10) according to one of Claims 1 to 4.

6. Measuring method for determining a batch-specific characteristic of a plasticized plastic as it flows during an injection-moulding operation through a flow channel (12) provided between a plasticizing unit (14) and a tool (16) and having a taper (34), comprising the following steps:
- carrying out during a first injection-moulding operation a first measurement, in which first measurement data of a first pressure sensor (22), provided along the flow channel (12), and of a second pressure sensor (28), provided along the flow channel (12), are detected during a first measuring interval with a first lower measuring time and a first upper measuring time;
- passing on the first measurement data of the first measurement to a first evaluation module and to a second evaluation module;
- calculating in the first evaluation module a second measuring interval with a second lower measuring time and a second upper measuring time, the second measuring interval covering the time period within the injection operation within which a laminar flow can be assumed in the measuring device and/or the flow channel;
- determining a first batch-specific characteristic in the second evaluation module;
- storing the first lower and upper measuring times and the first batch-specific characteristic;
- carrying out during a second injection-moulding operation a second measurement, in which second measurement data of the first pressure sensor (22) and of the second pressure sensor (28) are detected during the second measuring interval.

7. Measuring method according to Claim 6, **characterized in that** the first lower measuring time and/or the first upper measuring time are set manually.

8. Measuring method according to Claim 6 or 7, **characterized in that** the lower and/or upper measuring times are statistically evaluated and values determined for subsequent injection-moulding operations are used for the lower and/or upper measuring time.

9. Measuring method according to one of Claims 6 to 8, **characterized in that** the batch-specific characteristic determined in the second evaluation module is passed to an open-loop control and/or closed-loop control of the injection-moulding machines as an input signal.

## Revendications

1. Dispositif de mesure pour machine de moulage par injection destiné à déterminer un indice spécifique de charge d'une matière plastique plastifiée, comprenant
un canal d'écoulement (12) disposé entre une unité de plastification (14) d'une machine de moulage par injection et un outil (16),
dans lequel un premier capteur de pression (22) et un second capteur de pression (28) et un premier capteur de température (24) et un second capteur de température (30) sont disposés le long du canal d'écoulement (12), le canal d'écoulement (12) comprend, entre le premier capteur de pression (22) et le second capteur de pression (28), un rétrécissement (34),
**caractérisé en ce qu'**il est prévu un premier module d'évaluation externe et un second module d'évaluation externe,
dans lequel le dispositif de mesure (10) est conçu de manière à ce que
- pendant un premier processus de moulage par injection, des premières données de mesure du premier capteur de pression (22) disposé le long du canal d'écoulement (12) et du second capteur de pression (28) disposé le long du canal d'écoulement (12) soient détectées pendant un premier intervalle de mesure à un premier instant de mesure inférieur et à un premier instant de mesure supérieur,
- les premières données de mesure de la première mesure soient réacheminées vers le premier module d'évaluation et vers le second module d'évaluation,
- un second intervalle de mesure soit calculé dans le premier module d'évaluation avec un second instant de mesure inférieur et un second instant de mesure supérieur, dans lequel le second intervalle de mesure englobe la période de temps, au cours du processus d'injection, au cours de laquelle un écoulement laminaire peut être reçu dans le dispositif de mesure et/ou le canal d'écoulement,
- un premier indice spécifique de la charge soit déterminé dans le second module d'évaluation,
- les premiers instants de mesure supérieur et inférieur et le premier indice spécifique de la charge soient stockés, et
- une seconde mesure soit effectuée pendant un second processus de moulage par injection lors duquel des secondes données de mesure du premier capteur de pression (22) et du second capteur de pression (28) sont détectées pendant le second intervalle de mesure.

2. Dispositif de mesure selon la revendication 1, **caractérisé en ce que** le second capteur de pression (28) est disposé à l'intérieur de l'outil (16).

3. Dispositif de mesure selon la revendication 1 ou 2, **caractérisé en ce que** le dispositif de mesure (10) est réalisé sous la forme d'un composant séparé.

4. Dispositif de mesure selon l'une quelconque des revendications 1 à 3, **caractérisé en ce que** le premier module d'évaluation et/ou le second module d'évaluation sont intégrés dans une unité de commande et/ou une unité de régulation de la machine de moulage par injection.

5. Système de moulage par injection, comprenant au moins un dispositif de mesure (10) selon l'une quelconque des revendications 1 à 4.

6. Procédé de mesure destiné à déterminer un indice spécifique de la charge d'une matière plastique plastifiée lors de son écoulement à travers un canal d'écoulement (12) prévu entre une unité de plastification (14) et un outil (16) et présentant un rétrécissement (34) pendant un processus de moulage par injection, comprenant les étapes consistant à :
- effectuer une première mesure pendant un premier processus de moulage par injection lors duquel des premières données de mesure d'un premier capteur de pression (22) prévu le long du canal d'écoulement (12) et d'un second capteur de pression (28) prévu le long du canal d'écoulement (12) pendant un premier intervalle de mesure ayant un premier instant de mesure inférieur et un premier instant de mesure supérieur sont détectées ;
- réacheminer les premières données de mesure de la première mesure vers un premier module d'évaluation et vers un second module d'évaluation ;
- calculer dans le premier module d'évaluation un second intervalle de mesure ayant un second instant de mesure inférieur et un second instant de mesure supérieur, dans lequel le second intervalle de mesure englobe l'intervalle de temps, au cours du processus d'injection, lors duquel un écoulement laminaire peut être reçu dans le dispositif de mesure et/ou le canal d'écoulement,
- déterminer un premier indice spécifique de la charge dans le second module d'évaluation ;
- stocker les premiers instants de mesure inférieur et supérieur et le premier indice spécifique de la charge ;
- effectuer une seconde mesure pendant un second processus de moulage par injection, lors duquel des secondes données de mesure du premier capteur de pression (22) et du second capteur de pression (28) sont détectées pendant le second intervalle de mesure.

7. Procédé de mesure selon la revendication 6, **caractérisé en ce que** le premier instant de mesure inférieur et/ou le premier instant de mesure supérieur sont réglés manuellement.

8. Procédé de mesure selon la revendication 6 ou 7, **caractérisé en ce que** les instants de mesure inférieur et/ou supérieur sont évalués statistiquement et **en ce que** des valeurs déterminées pour des processus de moulage par injection suivants sont utilisées pour l'instant de mesure inférieur et/ou supérieur.

9. Procédé de mesure selon l'une quelconque des revendications 6 à 8, **caractérisé en ce que** l'indice spécifique de la charge déterminé dans le second module d'évaluation est acheminé vers une unité de commande et/ou une unité de régulation des machines de moulage par injection sous la forme d'un signal d'entrée.
